# FASCICULE DE BREVET EUROPEEN

(11) **EP 1 687 185 B1**
(45) Date de publication et mention de la délivrance du brevet: **16.04.2008**
(21) Numéro de dépôt: 04805461.3
(22) Date de dépôt: 16.11.2004
(51) Int. Cl.: B60R 21/045, B60R 21/00

(54) **PLANCHE DE BORD A PARTIE INFERIEURE MOBILE EN CAS DE CHOC ET VEHICULE AUTOMOBILE CORRESPONDANT**
EINEN UNTEREN TEIL UMFASSENDES ARMATURENBRETT, DER SICH BEI EINEM AUFPRALL BEWEGEN KANN, UND ENTSPRECHENDES FAHRZEUG
DASHBOARD COMPRISING A LOWER PART WHICH CAN MOVE IN EVENT OF IMPACT AND CORRESPONDING MOTOR VEHICLE

(30) Priorité: 17.11.2003 FR 0313431; 22.04.2004 FR 0404288
(43) Date de publication de la demande: 09.08.2006
(73) Titulaire: Faurecia Interieur Industrie, 92000 Nanterre (FR)
(72) Inventeur: BERGERIOUX, Jacques, F-95810 Arronville (FR); PONTHIEU, Didier, F-60480 La Neuville Saint Pierre (FR)
(74) Mandataire: Domenego, Bertrand
(86) Numéro de dépôt international: PCT/FR2004/002924
(87) Numéro de publication internationale: WO 2005/049388

(56) Documents cités:
- DE-A- 4 243 791
- DE-A- 10 055 051
- DE-A- 19 610 282
- US-A- 3 876 228
- US-A- 5 752 718

## Description

La présente invention concerne une planche de bord pour véhicule automobile selon le préambule de la revendication 1.

Généralement, les véhicules automobiles sont équipés de système de sécurité, tels que des ceintures, qui permettent de retenir les bustes des occupants avant en cas de choc frontal du véhicule contre un obstacle.

Toutefois, dans certains cas, les membres inférieurs, et en particulier les genoux des occupants avant, peuvent, lors d'un tel choc, percuter la partie inférieure de la planche de bord.

La partie inférieure de la planche de bord étant rigide, cette percussion peut résulter en des contusions sur les genoux.

DE 196 10 282décrit une planche de bord du type précité.

EP-960 785 décrit une planche de bord.

La partie inférieure de la planche de bord est reliée à la traverse de la planche de bord par l'intermédiaire de supports. Ces supports sont destinés à se déformer afin d'absorber l'énergie de percussion des genoux d'un occupant avant sur la partie inférieure de la planche de bord.

Toutefois, l'effort opposé aux genoux d'un occupant avant du véhicule en cas de choc frontal reste élevé de sorte que les risques de contusion sont encore importants.

Un but de l'invention est de résoudre ce problème en fournissant une planche de bord du type précité, qui permette de limiter les risques de contusion sur les genoux d'un occupant avant d'un véhicule automobile en cas de choc frontal.

A cet effet, l'invention a pour objet une planche de bord selon la revendication 1.

Des modes particuliers de réalisation de l'invention font l'objet des revendications 2 à 9.

L'invention a également pour objet un véhicule automobile, selon la revendication 10.

L'invention sera mieux comprise à la lecture de la description qui va suivre, donnée uniquement à titre d'exemple, et faite en se référant aux dessins annexés, sur lesquels :
- la figure 1 est une section partielle, longitudinale et schématique d'une planche de bord d'un véhicule automobile selon l'invention,
- la figure 2 est une vue schématique agrandie en perspective éclatée illustrant les moyens de liaison de la partie inférieure à la partie supérieure de la planche de bord de la figure 1,
- la figure 3 est une vue schématique de dessus des moyens de liaison de la figure 2,
- la figure 4 est une vue analogue à la figure 1 illustrant la planche de bord après percussion de sa partie inférieure par les genoux d'un occupant d'un véhicule automobile, et
- la figure 5 est une section partielle, longitudinale et schématique, illustrant les moyens de liaison d'une variante de la planche de bord de la figure 1,
- la figure 6 est une vue schématique partielle de dessus des moyens de liaison de la planche de bord de la figure 5,
- la figure 7 est une vue schématique de dessus de moyens de liaison d'une autre variante de la planche de bord de la figure 1,
- la figure 8 est une vue analogue à la figure 1 illustrant encore une autre variante de la planche de bord de la figure 1, et
- la figure 9 est une vue schématique partielle et en perspective, illustrant les moyens de liaison de la variante de la figure 8.

Dans tout ce qui suit les orientations utilisées sont les orientations habituelles d'un véhicule automobile. Ainsi, les termes « longitudinal », « latéral », « avant », « arrière », « droit » et « gauche » s'entendent par rapport à la position d'un conducteur et au sens de marche du véhicule automobile.

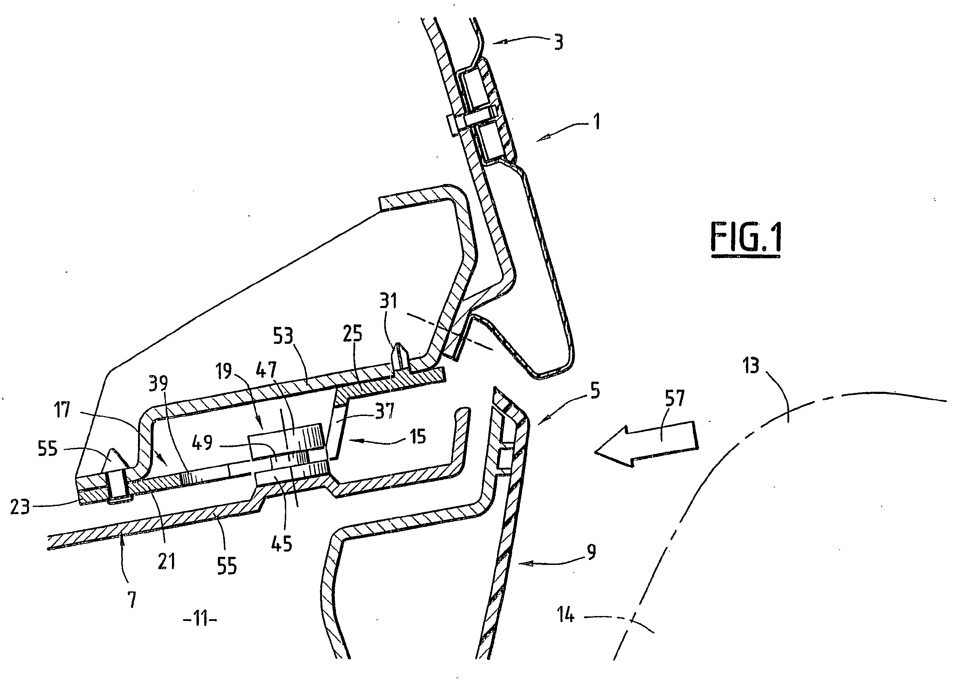

La figure 1 illustre une planche de bord 1 d'un véhicule automobile.

La section de la figure 1 a été réalisée dans le tronçon droit de la planche de bord 1 qui est situé en face du siège avant droit du véhicule automobile.

La planche de bord 1 comprend une partie supérieure 3 et une partie inférieure 5.

La partie supérieure 3 est fixe et solidarisée à la caisse du véhicule automobile par l'intermédiaire d'une traverse non-représentée qui s'étend entre les montants latéraux, dits montants « A » de la caisse.

La partie supérieure 3 s'étend par exemple sur toute la largeur de la planche de bord 1.

La partie inférieure 5 est dans l'exemple représenté constituée par un vide-poche. On distingue ainsi sur la figure 1 le corps 7 et la porte arrière 9 du vide-poche 5. De manière classique, la porte 9 est articulée par rapport au corps 7 pour permettre d'accéder à l'espace 11 délimité à l'intérieur du corps 7.

Le corps 7 et la porte 9 n'ont été représentés que partiellement sur la figure 1, mais la structure générale de ces éléments est classique et ne sera donc pas décrite plus en détail par la suite.

La porte 9 est située en regard des membres inférieurs et en particulier des genoux 13 et des jambes 14 du passager du véhicule automobile occupant le siège avant droit. De manière classique, ce siège avant droit peut être associé à un dispositif de retenue du passager en cas de choc, tel qu'une ceinture de sécurité.

Le vide-poche 5 a une étendue latérale plus réduite que celle de la partie supérieure 3. Ainsi, le vide-poche 5 ne s'étend latéralement qu'en regard du siège avant droit.

Le vide-poche 5 est relié à la partie supérieure 3 par des moyens 15 de liaison qui comprennent des agrafes 17 et des plots 19 d'encliquetage associés deux à deux, c'est-à-dire que chaque agrafe 17 est associée à un plot 19.

Le vide-poche 5 est par exemple liée à la partie supérieure 3 par plusieurs paires agrafe 17/plot 19 réparties latéralement les unes à côté des autres. Seule une paire agrafe 17/plot 19 est visible sur la figure 1.

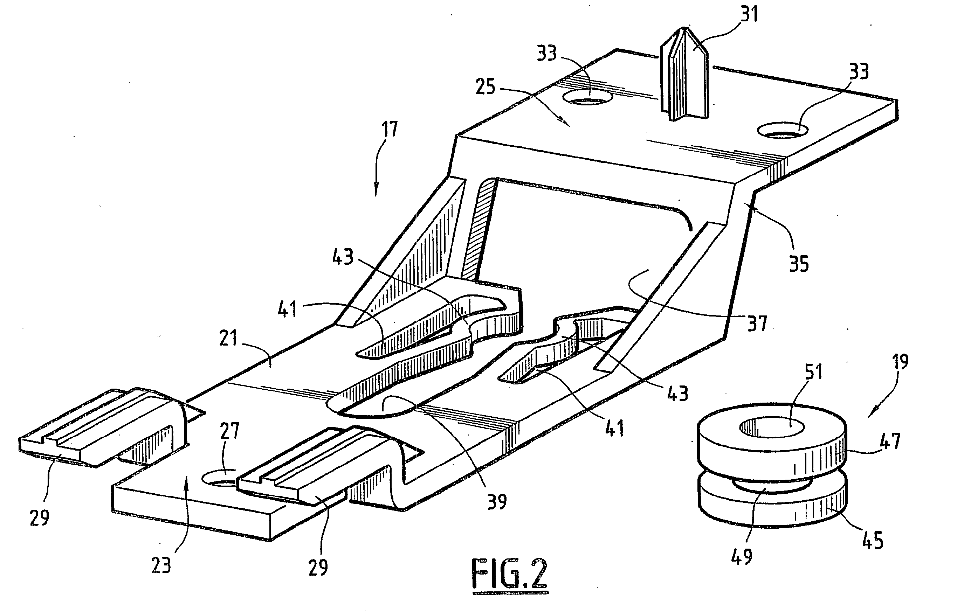

La structure des agrafes 17 et des plots 19 étant analogue; seule celle de la paire visible sur les figures 1 à 4 sera décrite par la suite.

L'agrafe 17 est par exemple une pièce réalisée en matière plastique.

Elle comprend dans l'exemple représenté une plaque principale 21 prolongée par une patte avant 23 et une plaque arrière 25 de fixation à la partie supérieure 3 de la planche de bord 1.

La patte avant 23 est par exemple coplanaire avec la plaque principale 21. Un orifice 27 de fixation traverse la patte avant 23.

La patte avant 23 est bordée latéralement par deux languettes 29 de positionnement qui sont en surplomb vers le haut par rapport au plan de la plaque principale 21.

La plaque arrière de fixation 25 est munie d'un téton central 31 de positionnement qui fait saillie vers le haut. Deux orifices 33 sont ménagés dans la plaque arrière de fixation 25, latéralement de part et d'autre du téton 31.

La plaque arrière de fixation 25 est en surplomb par rapport à la plaque principale 21 et est reliée à cette dernière par une paroi inclinée 35 dans laquelle un passage 37 est ménagé.

Une fente 39 s'étend longitudinalement au centre de la plaque principale 21, depuis le passage 37 vers l'avant. Deux encoches 41 de plus faible étendue longitudinale sont ménagées de part et d'autre de la fente 39 dans la plaque principale 21, au voisinage du passage 37. Ces encoches 41 ne débouchent pas dans le passage 37.

La fente 39 constitue, grâce à ses bords latéraux, une glissière longitudinale de guidage dans laquelle le plot d'encliquetage 19 peut coulisser, comme on le verra par la suite.

Les bords latéraux de la glissière 39 présentent, au droit des encoches 41, des tronçons d'encliquetage 43 en arc de cercle qui font saillie latéralement vers l'intérieur de la glissière 39.

Grâce aux encoches 41, les tronçons 43 peuvent se déformer élastiquement latéralement.

Le plot d'encliquetage 19 comprend un disque inférieur 45, un disque supérieur 47 et une tige intermédiaire 49 de diamètre réduit reliant les deux disques 45 et 47. Un orifice central 51 traverse de part en part le plot 19.

La tige intermédiaire 49 a un diamètre correspondant sensiblement à celui des tronçons 43 de l'agrafe 17.

Comme on le voit sur la figure 1, l'agrafe 17 est fixée sous une paroi inférieure 53 de la partie supérieure 3 de la planche de bord 1. Cette fixation est par exemple réalisée grâce à des rivets 55 qui traverse les orifices 27 et 33 de l'agrafe 17. Les languettes 29 et le téton 31 sont engagées dans des logements complémentaires de la paroi 53 afin de garantir un positionnement correct de l'agrafe 17 par rapport à la partie supérieure 3.

Le plot d'encliquetage 19 est fixé sur une paroi supérieure 55 du corps 7 du vide-poche 5. Cette fixation est par exemple assurée grâce à un rivet traversant l'orifice 51 du plot 19 et engagé dans la paroi supérieure 55.

Dans la position des figures 1 à 3, la tige intermédiaire 49 du plot d'encliquetage 19 est enserrée entre les tronçons d'encliquetage 43 de l'agrafe 17 où elle est maintenue par complémentarité de forme.

Pour atteindre cette position, le vide-poche 5 a été déplacé longitudinalement vers l'avant par rapport à la partie supérieure 3, comme matérialisé par la flèche 57 sur le figure 1. Le disque supérieur 47 du plot d'encliquetage 19 a alors traversé le passage 37 de la paroi 35 de l'agrafe 17 et la tige intermédiaire 49 a pénétré dans la glissière 39, le disque inférieur 45 passant sous la plaque principale 21.

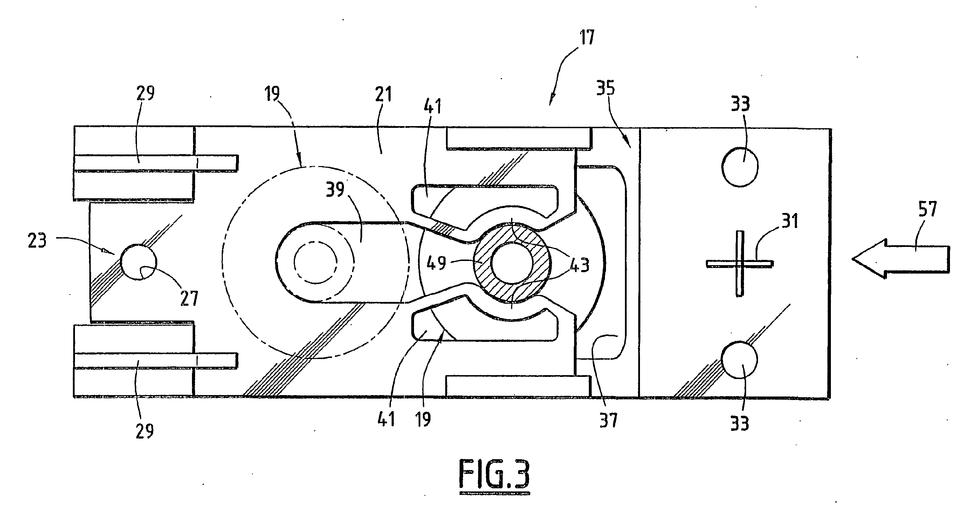

Ce mouvement de translation s'est poursuivi par déformation élastique des tronçons d'encliquetage 43 jusqu'à ce que la tige intermédiaire 49 soit logée entre ceux-ci, comme représenté en trait fort sur la figure 3, où le plot d'encliquetage 19 a été coupé au droit de la tige 49 pour faciliter la représentation.

Le vide-poche 5 a donc été assemblé à la partie supérieure 3 par encliquetage.

La fixation entre le vide-poche 5 de la planche de bord 1 et la caisse du véhicule automobile a, éventuellement, été complétée par exemple par un vissage d'une région inférieure du vide-poche 5 d'une part à droite au montant latéral droit de la caisse, et d'autre part, à gauche, à une jambe de force reliant la traverse de la planche de bord 1 au plancher du véhicule.

Ces dernières fixations ont créé par exemple une liaison pivotante autour d'un axe inférieur horizontal entre le vide-poche 5 et la caisse du véhicule automobile.

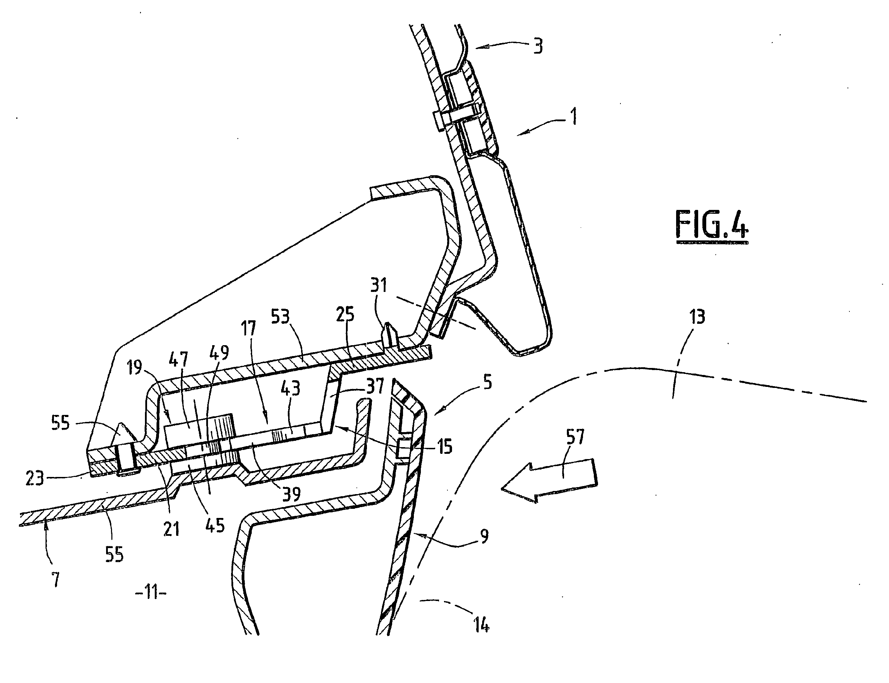

Ainsi, le vide-poche 5 peut pivoter légèrement entre une position reculée illustrée par la figure 1 et une position avancée illustrée par la figure 4.

Dans la position avancée, le plot d'encliquetage 19 s'est dégagé des tronçons d'encliquetage 43 et s'est avancé dans la glissière 39 jusqu'au fond de cette dernière, la glissière 39 guidant le plot 19 au cours de ce déplacement. La position du plot 19 est celle représentée en traits mixtes sur la figure 3.

Le plot 19 a alors avancé longitudinalement d'une course de 20mm environ de sorte que la paroi supérieure 55 du corps 7 et la porte arrière 9 du vide-poche 5 ont avancé par rapport à la partie supérieure 3 de la planche de bord 1.

L'agrafe 17 est adaptée pour que, lorsque le vide-poche 5 est en position reculée et que l'on exerce sur lui un effort longitudinal vers l'avant d'une intensité prédéterminée, les tronçons d'encliquetage 43 se déforment élastiquement en libérant la tige intermédiaire 49 du plot d'encliquetage 19. Le sens de l'effort est celui de la flèche 57 sur la figure 1.

Typiquement, l'intensité prédéterminée est d'environ 200kg-force soit environ 200N.

Les moyens 15 de fixation forment donc des moyens de liaison débrayable sous un effort prédéterminé.

En l'absence de choc frontal, le vide-poche 5 est dans sa position reculée illustrée par la figure 1.

En cas de choc frontal, la ceinture de sécurité retient le buste du passager du siège avant droit.

Si ses genoux 13 ou ses jambes 14 viennent percuter la porte arrière 9 du vide-poche 5, avec un effort supérieur à environ 200 kg-force, alors les moyens 15 de liaison débrayent et le plot d'encliquetage 19 se dégage des tronçons 43 d'encliquetage de l'agrafe 17, puis est guidé sensiblement sans frottement dans la glissière 39.

On observera que l'agrafe 17 ne comprend pas de moyens d'absorption de l'énergie de la percussion des genoux 13 ou des jambes 14 sur le vide-poche 5 une fois que le plot d'encliquetage 19 s'est dégagé des tronçons d'encliquetage 43.

Chaque paire agrafe 17/plot d'encliquetage 19 se comporte de manière analogue de sorte que le vide-poche 5 passe en position avancée en cas de percussion des genoux 13 ou des jambes 14 de l'occupant contre la partie inférieure 5.

La course parcourue par le vide-poche 5 de la planche de bord 1 au cours de ce déplacement est suffisante pour que les genoux 13 du passager ne soient plus au contact de du vide-poche 5.

Ainsi, lors d'un choc frontal, les genoux 13 et les jambes 14 du passager ne rencontrent qu'une très faible résistance, de sorte que les risques de contusion sont limités.

En outre, l'espace libéré devant les genoux 13 et les jambes 14 grâce au débrayage des moyens 15 de liaison, facilite la sortie du passager du véhicule après le choc frontal.

La structure des moyens 15 de liaison débrayable permet de maîtriser de manière satisfaisante l'effort seuil au-delà duquel ils débrayent. On notera également que la fixation du vide-poche 5 sur la partie supérieure 3 de la planche de bord 1 est simple et rapide à mettre en oeuvre, puisqu'elle est assurée par encliquetage.

En outre, la planche de bord 1 peut être ramenée à son état initial en faisant reculer le vide-poche 5 jusqu'à ce que les plots d'encliquetage 19 s'engagent à nouveau dans les tronçons d'encliquetage 43 des agrafes 17. Il n'est donc pas obligatoirement nécessaire de remplacer une partie de la planche de bord 1 après le choc frontal.

De manière générale, le nombre de paires agrafe 17/plot 19 utilisées peut être varié.

De manière générale également, la partie inférieure 5 n'est pas nécessairement un vide-poche.

De manière analogue, des moyens 15 de liaison tels que ceux décrits précédemment peuvent être utilisés pour fixer à la partie supérieure 3 une partie inférieure gauche de la planche de bord située en regard du siège avant gauche, voir même une partie inférieure centrale située latéralement entre les sièges avant.

De manière encore plus générale, l'intensité de l'effort longitudinal au-delà de laquelle les moyens 15 de liaison débrayent est inférieure à 4000N et de préférence inférieure à 2000N.

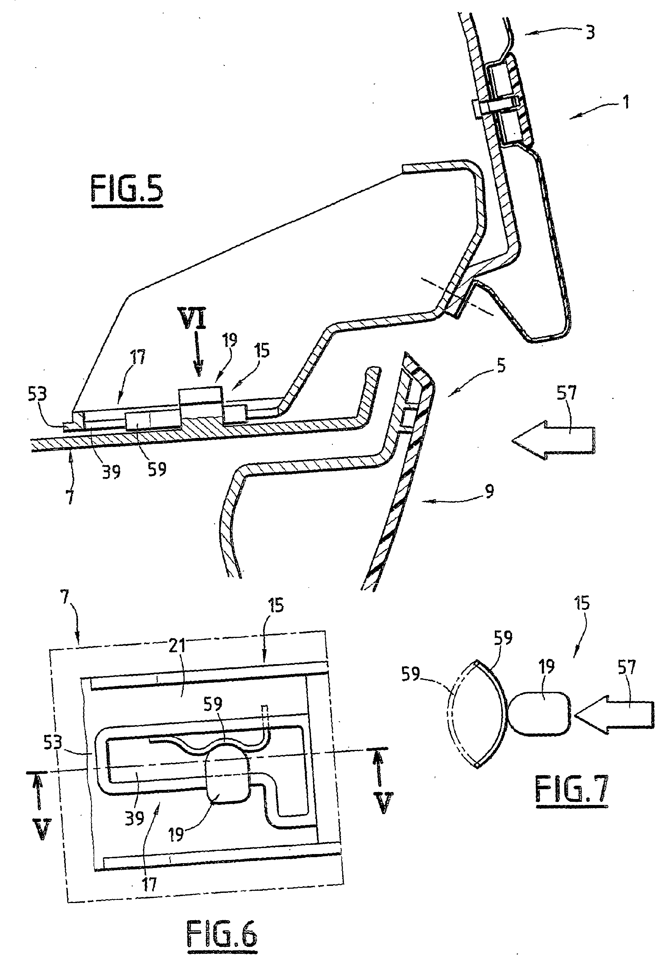

Dans la variante des figures 5 et 6, la plaque principale 21 de chaque agrafe 17 est venue de matière avec la paroi inférieure 53 de la partie supérieure 3 de la planche de bord.

Les tronçons d'encliquetage précédents 43 ont été remplacés par une lame métallique d'encliquetage 59 sur laquelle la matière plastique de la plaque 21 a par exemple été surmoulée. Celle lame 59 est destinée à se déformer élastiquement pour permettre les débrayages des moyens 15 de liaison.

Le plot 19 est par exemple venu de matière avec le corps 7 de la partie inférieure 5.

L'utilisation de lames métalliques 59 permet d'ajuster facilement l'intensité prédéterminée de l'effort longitudinal au-delà de laquelle les moyens 15 de liaison débrayent et la partie inférieure 5 avance par rapport à la partie supérieure 3.

Dans encore une autre variante illustrée par la figure 7, les lames 59 peuvent être non pas des lames d'encliquetage, mais des lames bistables. Ainsi, la lame 59 des moyens 15 de liaison illustrés par la figure 7 comprend une première position stable, dans laquelle elle est cintrée avec une concavité dirigée vers l'avant. Le plot 19 est alors en appui contre celle-ci et la partie inférieure 5 est en position reculée.

La lame 59 offre une seconde position stable, illustrée en pointillés sur la figure 7, dans laquelle elle est cintrée avec une concavité dirigée vers l'arrière du véhicule. Lorsque le plot 19 est en appui contre la lame 59 dans cette position, la partie inférieure 5 est alors en position avancée.

Le passage de la partie inférieure 5 de sa position reculée vers sa position avancée s'effectue par déformation élastique de la lame 59 pour qu'elle passe de sa première position stable à sa seconde position stable.

Ici encore l'utilisation d'une lame métallique 59 permet d'ajuster de manière satisfaisante l'intensité prédéterminée au-delà de laquelle les moyens 15 de liaison débrayent.

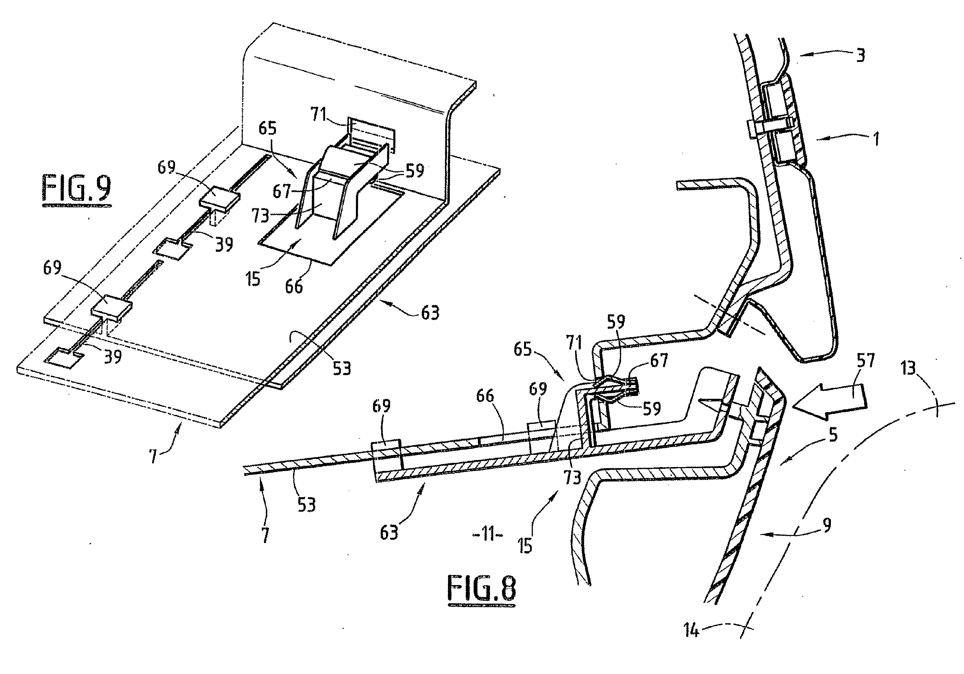

Les figures 8 et 9 illustrent encore une autre variante de la planche de bord 1 de la figure 1.

Ici, la partie inférieure mobile 5 n'est pas constituée par l'ensemble du vide poche, mais uniquement par sa porte 9 et pas une région arrière 63 du corps 7 du vide poche. Le reste du corps 7 est par exemple venu de matière avec la partie supérieure 3, ou rapporté et fixé sur la partie supérieure 3 par tout moyen d'association connu, par exemple vis, colle, boutrolage, soudage, etc...

La région arrière 63 du corps 7 comprend par exemple une plaque qui s'étend transversalement sur toute la largeur du vide poche. Cette région arrière 63 est reliée à la partie supérieure 3, en particulier à sa paroi 53, par les moyens 15 de liaison.

Ces moyens 15 de liaison comprennent dans l'exemple représenté plusieurs pattes 65 espacées latéralement, et dont une seule est visible sur les figures 8 et 9. Ces pattes 65 ont sensiblement une forme de L inversé et font saillie vers le haut depuis la région arrière 63 au travers d'ouvertures 66 prévues dans la paroi 53 de la partie supérieure 3.

Ces pattes 65 comprennent des branches 67 orientées vers l'arrière et munies de lames 59 d'encliquetage déformables élastiquement. Chaque branche 67 comprend par exemple une lame 59 inférieure et une lame 59 supérieure. La région arrière 63 du corps 7 est par exemple prolongée vers le haut par des plots 69 de guidage qui sont engagés dans des fentes 39 de guidage qui s'étendent longitudinalement dans la paroi 53 de la partie supérieure 3.

Dans la position reculée de la partie inférieure 5, illustrée par la figure 8, les branches 67 sont engagées dans des ouvertures 71 ménagées dans une paroi 73 sensiblement orthogonale à la paroi inférieure 53 de la partie supérieure 3.

Lorsqu'un effort longitudinal supérieur à l'effort seuil est appliqué sur la porte inférieure 9, les lames 59 se déforment élastiquement de sorte que les pattes 67 peuvent se dégager des ouvertures 71 comme illustré par la figure 9. Les moyens 15 de liaison sont alors débrayés permettant ainsi au plot 69 d'avancer dans les fentes 39 en guidant ainsi fa partie inférieure 3 jusqu'à sa position avancée.

Ainsi, seule une faible partie de la planche de bord 1 est affectée par le déplacement résultant de la percussion sur la porte arrière 9. De ce fait, la planche de bord 1 est plus simple et économique à concevoir et à réaliser. En outre, les risques que ce déplacement induise des endommagements de la planche bord 1 ou des pièces voisines sont réduits.

## Revendications

1. Planche de bord (1) pour véhicule automobile, du type comprenant une partie supérieure (3) et au moins une partie inférieure (5), la partie inférieure (5) étant reliée par des moyens (15) de liaison à la partie supérieure (3), la partie inférieure étant constituée par un vide-poche (5) destiné à s'étendre en regard des membres inférieurs d'un passager du véhicule automobile, les moyens (15) de liaison étant des moyens de liaison débrayables en cas de percussion d'une intensité prédéterminée d'un occupant du véhicule contre la partie inférieure (5), pour permettre à la partie inférieure (5) de se déplacer par rapport à la partie supérieure (3) vers l'avant du véhicule automobile, **caractérisée en ce que** les moyens (15) de liaison sont des moyens de liaison par encliquetage.

2. Planche de bord selon la revendication 1, **caractérisée en ce qu'**elle comprend des moyens (39) de guidage de la partie inférieure (5) par rapport à la partie supérieure (3) après débrayage des moyens (15) de liaison.

3. Planche de bord selon la revendication 2, **caractérisée en ce que** les moyens (39) de guidage sont adaptés pour guider la partie inférieure (5) sensiblement sans absorption d'énergie de la percussion.

4. Planche de bord selon la revendication 2 ou 3, **caractérisée en ce que** les moyens (15) de liaison comprennent un organe de liaison (19) destiné à être guidé par les moyens (39) de guidage après débrayage des moyens (15) de liaison.

5. Planche de bord selon la revendication 4, **caractérisée en ce que** les moyens de guidage comprennent une glissière (39) et les moyens (15) de liaison comprennent au moins un relief (43, 59) d'encliquetage prévu sur la glissière (39) et complémentaire de l'organe de liaison (19).

6. Planche de bord selon la revendication 5, **caractérisée en ce que** la glissière (39) est portée par la partie supérieure (3) et l'organe d'encliquetage (19) est porté par la partie inférieure (5).

7. Planche de bord selon la revendication 6, **caractérisée en ce que** la glissière (39) est ménagée dans une pièce (17) rapportée sur la partie supérieure (3).

8. Planche de bord selon l'une des revendications précédentes, **caractérisée en ce que** l'intensité prédéterminée est inférieure à 4000N.

9. Planche de bord selon l'une des revendications précédentes, **caractérisée en ce que** les moyens (15) de liaison comprennent au moins une lame métallique (59) déformable élastiquement pour permettre le débrayage des moyens (15) de liaison.

10. Véhicule automobile, **caractérisé en ce qu'**il comprend une planche de bord selon l'une des revendications précédentes.

## Claims

1. Dashboard (1) for a motor vehicle, of the type comprising an upper part (3) and at least one lower part (5), the lower part (5) being connected to the upper part (3) by connecting means (15), the lower part comprising a glovebox (5) which is designed to extend opposite the lower limbs of a passenger in the motor vehicle, the connecting means (15) being connecting means which can be released in the case of an impact of predetermined intensity by an occupant of the vehicle against the lower part (5) to allow the lower part (5) to move in relation to the upper part (3) towards the front of the motor vehicle, **characterised in that** the connecting means (15) are snap-link connecting means.

2. Dashboard according to claim 1, **characterised in that** it comprises means (39) for guiding the lower part (5) in relation to the upper part (3) after the connecting means (15) have been released.

3. Dashboard according to claim 2, **characterised in that** the guiding means (39) are designed to guide the lower part (5) substantially without absorbing the energy of the impact.

4. Dashboard according to claim 2 or 3, **characterised in that** the connecting means (15) comprise a connection member (19) designed to be guided by the guiding means (39) after the connecting means (15) have been released.

5. Dashboard according to claim 4, **characterised in that** the guiding means comprise a slider (39) and the connecting means (15) comprise at least one snap-link projection (43, 59) provided on the slider (39) and supplementing the connection member (19).

6. Dashboard according to claim 5, **characterised in that** the slider (39) is supported by the upper part (3) and the snap-link member (19) is supported by the lower part (5).

7. Dashboard according to claim 6, **characterised in that** the slider (39) is housed in a part (17) attached to the upper part (3).

8. Dashboard according to any one of the preceding claims, **characterised in that** the predetermined impact is less than 4000 N.

9. Dashboard according to any one of the preceding claims, **characterised in that** the connecting means (15) comprise at least one resiliently deformable metal blade (59) to allow the connecting means (15) to be released.

10. Motor vehicle, **characterised in that** it comprises a dashboard according to any one of the preceding claims.

## Patentansprüche

1. Armaturenbrett (1) für ein Kraftfahrzeug in der Art mit einem oberen Teil (3) und mindestens einem unteren Teil (5), wobei der untere Teil (5) mit dem oberen Teil (3) mit Hilfe von Verbindungsmitteln (15) verbunden ist, wobei der untere Teil durch eine Ablage (5) gebildet ist, die sich im Verhältnis zu den unteren Gliedern eines Fahrgastes erstrecken soll, wobei die Verbindungsmittel (15) Verbindungsmittel sind, die im Falle eines Aufpralls vorgegebener Stärke eines Fahrgastes gegen den unteren Teil (5) entkoppelt werden können, damit der untere Teil (5) sich im Verhältnis zum oberen Teil (3) zum vorderen Teil des Kraftfahrzeuges bewegen kann, **dadurch gekennzeichnet, dass** die Verbindungsmittel (15) Mittel zur Verbindung durch Einrasten sind.

2. Armaturenbrett nach Anspruch 1, **dadurch gekennzeichnet, dass** es Mittel (39) zur Führung des unteren Teils (5) im Verhältnis zu dem oberen Teil (3) nach Entkoppelung der Verbindungsmittel (15) umfasst.

3. Armaturenbrett nach Anspruch 2, **dadurch gekennzeichnet, dass** die Führungsmittel (39) angepasst sind, um den unteren Teil (5) im Wesentlichen ohne Aufnahme der Stoßenergie zu führen.

4. Armaturenbrett nach Anspruch 2 oder 3, **dadurch gekennzeichnet, dass** die Verbindungsmittel (15) ein Verbindungsglied (19) umfassen, das dazu bestimmt ist, nach der Entkopplung der Verbindungsmittel (15) durch die Führungsmittel (39) geführt zu werden.

5. Armaturenbrett nach Anspruch 4, **dadurch gekennzeichnet, dass** die Führungsmittel eine Gleitschiene (39) umfassen, und die Verbindungsmittel (15) mindestens einen Rastvorsprung (43, 59) aufweisen, der auf der Gleitschiene (39) vorgesehen ist und komplementär zum Verbindungsglied (19) ausgebildet ist.

6. Armaturenbrett nach Anspruch 5, **dadurch gekennzeichnet, dass** die Gleitschiene (39) von dem oberen Teil (3) getragen ist und das Rastglied (19) von dem unteren Teil (5) getragen ist.

7. Armaturenbrett nach Anspruch 6, **dadurch gekennzeichnet, dass** die Gleitschiene (39) in einem Teil (17) angeordnet ist, das auf dem oberen Teil (3) angesetzt ist.

8. Armaturenbrett nach einem der vorhergehenden Ansprüche, **dadurch gekennzeichnet, dass** die vorgegebene Stärke kleiner als 4000 N ist.

9. Armaturenbrett nach einem der vorhergehenden Ansprüche, **dadurch gekennzeichnet, dass** die Verbindungsmittel (15) mindestens ein elastisch verformbares metallisches Blatt (59) umfassen, um die Entkopplung der Verbindungsmittel (15) zu ermöglichen.

10. Kraftfahrzeug, **dadurch gekennzeichnet, dass** es ein Armaturenbrett nach einem der vorangegangenen Ansprüche umfasst.
